# EUROPEAN PATENT APPLICATION

(11) **EP 1 783 974 A1**
(43) Date of publication of application: **09.05.2007**
(21) Application number: 05767117.4
(22) Date of filing: 01.08.2005
(51) Int. Cl.: H04L 12/66, H04L 12/46, G06F 13/00

(54) **INFORMATION PROCESSING SYSTEM, INFORMATION PROCESSING APPARATUS, SERVER APPARATUS, INFORMATION PROCESSING METHOD AND PROGRAM**

(30) Priority: 03.08.2004 JP 2004226478
(71) Applicant: MATSUSHITA ELECTRIC INDUSTRIAL CO., LTD., Osaka 571-8501 (JP)
(72) Inventor: GOBARA, Kunio Matsushita Electric Ind. Co.,Ltd., Chuo-ku, Osaka-shi Osaka 540-6319 (JP); MAEKAWA, Hajime Matsushita Electric Ind. Co.,Ltd., Chuo-ku, Osaka-shi Osaka 540-6319 (JP)
(74) Representative: Grünecker, Kinkeldey, Stockmair & Schwanhäusser Anwaltssozietät
(86) International application number: PCT/JP2005/014020
(87) International publication number: WO 2006/013811

(57) **Abstract**

An information processing apparatus 1 includes a request packet transmitting part 11 that transmits a request packet requesting a transmission of a reply packet through a communication processing apparatus 2, a reply packet receiving part 12 that receives the reply packet, a port maintenance time detecting part 13 that detects a port maintenance time of the communication processing apparatus 2 on the basis of the received reply packet, and a request packet transmission control part 14 that controls the transmission of the request packet using a dichotomizing search request packet on the basis of whether or not the reply packet is received. A server apparatus 3 includes a request packet receiving part 31 that receives the request packet, a reply packet transmitting part 32 that transmits the reply packet, and a reply packet transmission control part 33 that controls the transmission of the reply packet on the basis of the received request packet.

## Description

### <Technical Field>

The presence invention relates to an information processing system that detects a port maintenance time of a communication processing apparatus.

### <Background Art>

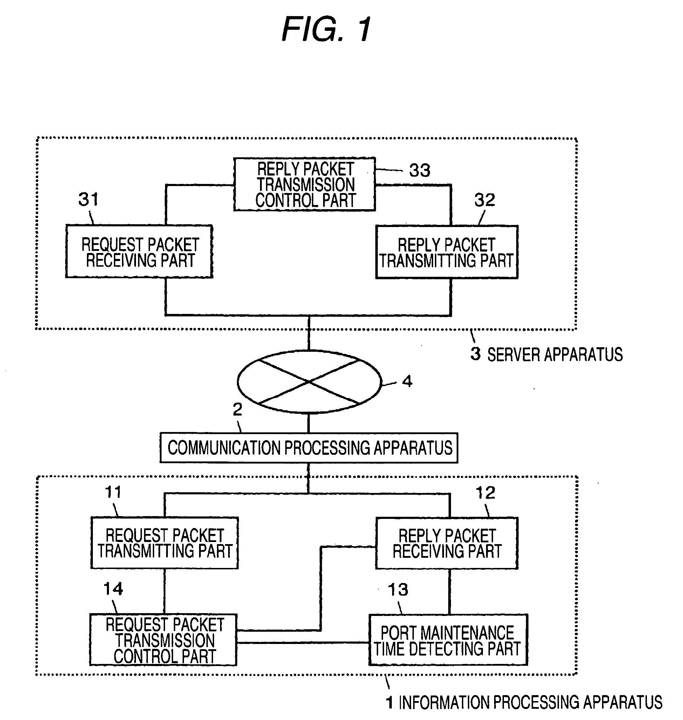

In an information processing system having an information processing apparatus, a communication processing apparatus, and a server apparatus, for example, a predetermined packet is transmitted from the information processing apparatus, such as a home PC (Personal Computer) or an appliance, to the server apparatus through the communication processing apparatus at regular intervals. This technology is disclosed in Pamphlet of International Publication No. 2004/030292 (page 1 and Fig. 1).

The communication processing apparatus is, for example, a router or the like having a NAT (Network Address Translation) function. Further, the predetermined packet is transmitted at regular intervals in order to inform whether or not an IP address of a WAN (Wide Area Network) of the communication processing apparatus changes, or in order to maintain a port of the communication processing apparatus (that is, a packet from the WAN to be transmitted to the information processing apparatus through the communication processing apparatus), such that an access from an external apparatus, such as a cellular phone or the like, to the information processing apparatus through the server apparatus can be established.

In the communication processing apparatus, such as a router or the like, having the NAT function, when the packet is transmitted from the LAN (Local Area Network) to the WAN, a private IP address and a port number of the LAN are converted into a global IP address and a port number of the WAN. Further, when a reply packet is received from the WAN, the packet is delivered to the information processing apparatus by performing a reverse conversion. Here, in the communication processing apparatus, a time for performing the address conversion is set. Specifically, when a predetermined period lapses after address conversion is performed between the WAN and the LAN latest, the address conversion on the packet received from the WAN is not performed (a new address conversion is performed on the packet received from the LAN). That is, the packet from the WAN is not received by the information processing apparatus, and thus the access from the external apparatus, such as a cellular phone or the like, to the information processing apparatus through the server apparatus cannot be established. The predetermined period is called a port maintenance time.

In the above-described information processing system, in order to enable the information processing apparatus to receive information from the server apparatus, in the communication processing apparatus, the address conversion needs to be performed on the packet from the server apparatus (that is, from the WAN) at every moment. Accordingly, even though the exchange of information does not need to be performed between the information processing apparatus and the server apparatus, it is necessary to enable the communication processing apparatus to perform the address conversion on the packet transmitted from the server apparatus by transmitting the packet from the information processing apparatus to the server apparatus through the communication processing apparatus at regular intervals. In this case, a transmission cycle at which the information processing apparatus transmits the packet at regular intervals may be demanded as long as possible. This is to reduce transmission of unnecessary packets and reduce a processing load due to the transmission of the packet in the information processing apparatus. Specifically, the transmission cycle at which the information processing apparatus transmits the packet at regular intervals is preferably slightly (for example, one or two seconds) shorter than the port maintenance time of the communication processing apparatus, to which the information processing apparatus is connected.

However, it cannot be seen to which communication processing apparatus the information processing apparatus is connected, in general, of various communication processing apparatuses commercially available from manufacturers, a cycle corresponding to the smallest port maintenance time is set in the information processing apparatus, and the packet is transmitted using the cycle. In this case, in the information processing apparatus connected to the communication processing apparatus having a long port maintenance time, the packet is transmitted at a prescribed short cycle at regular intervals. Then, a lot of unnecessary packets are transmitted.

### <Disclosure of the Invention>

The invention has been finalized in consideration of the above problems, and it is an object of the invention to provide an information processing system that can detect a port maintenance time of a communication processing apparatus to which the information processing apparatus is connected.

According to an aspect of the invention, an information processing system includes an information processing apparatus, a server apparatus, and a communication processing apparatus that performs a processing relative to communication between the information processing apparatus and the server apparatus. The information processing apparatus includes a request packet transmitting part that transmits a request packet, which is a packet for requesting a transmission of a reply packet to be transmitted from the server apparatus to the information processing apparatus through communication processing apparatus, through one port of the communication processing apparatus, a reply packet receiving part that receives the reply packet transmitted from the server apparatus through the port, a request packet transmission control part that controls, on the basis of whether or not the reply packet is received by the reply packet receiving part, the transmission of the request packet by the request packet transmitting part using a dichotomizing search, and a port maintenance time detecting part that detects, on the basis of the reply packet received by the reply packet receiving part, a port maintenance time of the communication processing apparatus. The server apparatus includes a request packet receiving part that receives the request packet, a reply packet transmitting part that transmits the reply packet, and a reply packet transmission control part that controls, on the basis of the request packet received by the request packet receiving part, the transmission of the reply packet.

With this configuration, on the basis of the reply packet received by the reply packet receiving part among reply packets transmitted in response to the request packet, the port maintenance time of the communication processing apparatus can be detected. Further, the transmission of the request packet is controlled using the dichotomizing search, and thus the request packet can be efficiently transmitted. As a result, the port maintenance time can be efficiently detected. Further, using the detected port maintenance time, for example, the packet can be transmitted at regular intervals. As a result, for example, unnecessary packets can be prevented from being transmitted.

### <Brief Description of the Drawings>

Fig. 1 is a block diagram showing the configuration of an information processing system according to a first embodiment of the invention.
Fig. 2 is a flowchart showing the operation of the information processing apparatus according to the first embodiment of the invention.
Fig. 3 is a flowchart showing the operation of a server apparatus according to the first embodiment of the invention.
Fig. 4A is a diagram showing the configuration of a request packet and a reply packet in the first embodiment of the invention.
Fig. 4B is a diagram showing the configuration of a request packet and a reply packet in the first embodiment of the invention.
Fig. 4C is a diagram showing the configuration of a request packet and a reply packet in the first embodiment of the invention.
Fig. 4D is a diagram showing the configuration of a request packet and a reply packet in the first embodiment of the invention.
Fig. 5 is a diagram illustrating transmission and reception of the request packet and the reply packet in the first embodiment of the invention.
Fig. 6 is a flowchart showing the operation of the information processing apparatus according to the first embodiment of the invention.
Fig. 7 is a diagram illustrating transmission of the request packet and reception of the reply packet in the first embodiment of the invention.
Fig. 8 is a diagram illustrating transmission of the request packet and reception of the reply packet in the first embodiment of the invention.
Fig. 9 is a flowchart showing the operation of the information processing apparatus according to the first embodiment of the invention.
Fig. 10 is a diagram illustrating transmission of the request packet and reception of the reply packet in the first embodiment of the invention.
Fig. 11 is a block diagram showing the configuration of an information processing system according to a second embodiment of the invention.
Fig. 12 is a flowchart showing the operation of an information processing apparatus according to the second embodiment of the invention.
Fig. 13 is a diagram illustrating transmission of a request packet and reception of a reply packet in the second embodiment of the invention.
Fig. 14 is a diagram illustrating the relationship between a packet round-trip time and a port maintenance time in the second embodiment of the invention.

### <Description of Reference Numerals and Signs>

1, 5: INFORMATION PROCESSING APPARATUS
2: COMMUNICATION PROCESSING APPARATUS
3: SERVER APPARATUS
11: REQUEST PACKET TRANSMITTING PART
12: REPLY PACKET RECEIVING PART
13, 51: PORT MAINTENANCE TIME DETECTING PART
14: REQUEST PACKET TRANSMISSION CONTROL PART
31: REQUEST PACKET RECEIVING PART
32: REPLY PACKET TRANSMITTING PART
33: REPLY PACKET TRANSMISSION CONTROL PART
52: PACKET ROUND-TRIP TIME MEASURING PART

### <Best Mode for Carrying Out the Invention>

### (First Embodiment)

An information processing system according to a first embodiment of the invention will be described with reference to the drawings.

Fig. 1 is a block diagram showing the configuration of an information processing system according to this embodiment. In Fig. 1, the information processing system according to this embodiment includes an information processing apparatus 1, a communication processing apparatus 2, and a server apparatus 3. In Fig. 1, a case where one information processing apparatus 1 is connected to the communication processing apparatus 2 has been described. Alternatively, two or more information processing apparatuses may be connected to the communication processing apparatus 2. Examples of the information processing apparatus 1 include a computer, a microwave oven, a telephone, a printer, a facsimile machine, a refrigerator, a washing machine, an air conditioner, a television, a video recorder, and a set-top box. The communication processing apparatus 2 and the server apparatus 3 are connected to each other through a wired or wireless communication line 4. Examples of the communication line 4 include Internet or Intranet.

The information processing apparatus 1 includes a request packet transmitting part 11, a reply packet receiving part 12, a port maintenance time detecting part 13, and a request packet transmission control part 14.

The request packet transmitting part 11 transmits one or more request packets to the server apparatus 3 through one port of the communication processing apparatus 2. Here, the request packet is a packet that requests the server apparatus 3 for a transmission of a reply packet. The request packet is, for example, a packet having a UDP header. Moreover, a payload of the request packet includes wait time information. Here, the wait time information is information about a wait time until the server apparatus 3 receives the request packet and transmits the reply packet. The wait time information may be information indicating the wait time (for example, information indicating that the wait time is two minutes) or may be information having a predetermined relationship with the wait time (for example, when the wait time is one minute and 58 seconds, information indicates two minutes obtained by adding two seconds to the wait time). In this embodiment, the former case will be described. Further, the reply packet is a packet that is transmitted from the server apparatus 3 to the information processing apparatus 1 through the communication processing apparatus 2. A port maintenance time in the communication processing apparatus 2 is detected according to whether or not the information processing apparatus 1 receives the reply packet (this will be described below).

Moreover, the request packet transmitting part 11 may include a transmitting device for performing the transmission (for example, a modem or a network card) or may not include the transmitting device (in this case, the transmitting device (not shown) is provided outside the request packet transmitting part 11). Further, the request packet transmitting part 11 may be implemented by hardware or may be implemented by software, such as a driver for driving the transmitting device.

The reply packet receiving part 12 receives the reply packet transmitted from the server apparatus 3. The reply packet is transmitted through the port of the communication processing apparatus 2, through which the request packet passes. Moreover, as described below, the reply packet receiving part 12 does not receive all the reply packets transmitted from the server apparatus 3. This is because, among the reply packets transmitted from the server apparatus 3, the reply packet transmitted to the communication processing apparatus 2 after the port maintenance time of the port, through which the request packet passes, lapses is not transmitted from the communication processing apparatus 2 to the information processing apparatus 1. The reply packet receiving part 12 may include a receiving device for performing the reception (for example, a modem or a network card) or may not include the receiving device (in this case, the receiving device (not shown) is provided outside the reply packet receiving part 12). Further, the reply packet receiving part 12 may be implemented by hardware or may be implemented by software, such as a driver for driving the receiving device.

The port maintenance time detecting part 13 detects, on the basis of the reply packet received by the reply packet receiving part 12, the port maintenance time of the communication processing apparatus 2. In this embodiment, the detection of the port maintenance time is performed on the basis of the longest wait time among wait times corresponding to the reply packets received by the reply packet receiving part 12. Here, 'the wait time corresponding to the reply packet' refers to the wait time corresponding to the wait time information included in the request packet requesting the transmission of the reply packet. Further, as for 'on the basis of the longest wait time', the longest wait time may be detected as the port maintenance time or a time different from the longest wait time may be detected as the port maintenance time. The 'time different from the longest wait time' is, for example, a time in consideration of a packet round-trip time between the information processing apparatus 1 and the server apparatus 3 with respect to the longest wait time. Moreover, the consideration of the packet round-trip time will be described in a second embodiment described below. Further, in the following description, 'the port maintenance time' indicates information representing the port maintenance time detected by the port maintenance time detecting part 13.

The port maintenance time that is detected by the port maintenance time detecting part 13 may be the port maintenance time of the communication processing apparatus 2 or may be a time shorter than the port maintenance time of the communication processing apparatus 2. For example, when the port maintenance time of the communication processing apparatus 2 is two minutes, the port maintenance time detecting part 13 may detect the port maintenance time of the communication processing apparatus 2 as one minute and fifty seconds. Moreover, the port maintenance time detected by the port maintenance time detecting part 13 may be set as a cycle for transmitting the packet to a transmitting part (not shown) that transmits the packet at regular intervals, may be stored in a predetermined recording medium, may be transmitted to other devices, or may be displayed on a display device. As such, the use of the detected port maintenance time does not matter.

The request packet transmission control part 14 controls the transmission of the request packet by the request packet transmitting part 11 using a dichotomizing search on the basis of whether or not the reply packet is received by the reply packet receiving part 12. The control of the transmission of the request packet by the request packet transmitting part 11 includes, for example, setting of the wait time information included in the request packet to be transmitted by the request packet transmitting part 11, and a control of a transmission timing of the request packet by the request packet transmitting part 11. More specifically, the request packet transmission control part 14 determines, on the basis of whether or not the reply packet is received by the reply packet receiving part 12, a wait time using the dichotomizing search, and controls the request packet transmitting part 11 to transmit a request packet having wait time information according to the determined wait time. The details of this processing will be described below.

The communication processing apparatus 2 performs a processing about communication between the information processing apparatus 1 and the server apparatus 3. The communication processing apparatus 2 according to this embodiment has a NAT function, and is called, for example, a router. The communication processing apparatus 2 according to this embodiment converts address information of a transmission source included in the packet to be transmitted from the information processing apparatus 1 (that is, address information of the information processing apparatus 1) into address information of a WAN of the communication processing apparatus 2.

Specifically, a source (transmission source) address included in the packet to be transmitted from the information processing apparatus 1 (private IP address; address A) and a source (transmission source) port number (port number B) are converted into a global IP address (address X) and a port number (port number Y) of the WAN of the communication processing apparatus 2. Further, the packet transmitted from the server apparatus 3 to the address X and the port number Y of the WAN of the communication processing apparatus 2 is transmitted to the information processing apparatus 1 while the address X and the port number Y of the transmission source are converted into the address A and the port number B of the information processing apparatus 1. Here, the global IP address is an address with which an information processing apparatus communicates with an external device (for example, an external device connected to the WAN (Internet or the like)). In general, the global IP address is an address that is used in the WAN, but it may be an address that is used in the LAN when an electronic apparatus communicates with a device connected to the LAN (for example, Intranet) through the router having a NAT function. The IP address may be, for example, an address based on the existing so-called IPv4 or may be an address based on a different version, such as IPv6.

Moreover, when a reception filtering rule is set in the communication processing apparatus 2, the reception of the packet based on the reception filtering rule is performed. If the address and the port number of the transmission source of the packet are an address P and a port number Q, for example, when the packet having the address and the port number of the transmission source of the address P and the port number Q is transmitted from the LAN to the WAN of the communication processing apparatus 2, the reception filtering rule includes Address Sensitive Filter in which only the packet from the address P is received, Port Sensitive Filter in which only the packet from the port number Q is received, and No filter in which no filter exists (no packets from any address and any port number are received). Here, the fact that the communication processing apparatus 2 receives the packet means that, in the port of the communication processing apparatus 2 allocated to the packet transmitted from the information processing apparatus 1 of the LAN, the packet from the WAN is received, then the address conversion is performed, and subsequently the packet is transmitted to the information processing apparatus 1 of the LAN.

As described in the above-described related art, a period in which the address conversion of the communication processing apparatus 2 is performed has a limitation. That is, as regards the address conversion is performed between the address A and the port number B, and the address X and the port number Y, when the port maintenance time of the communication processing apparatus 2 lapses after the address conversion is performed between them last time, the address conversion is not performed. Accordingly, even though the packet is transmitted to the address X and the port number Y through the communication line 4 after the port maintenance time lapses, the address conversion is not performed in the communication processing apparatus 2, and thus the information processing apparatus 1 cannot receive the packet.

The server apparatus 3 includes a request packet receiving part 31, a reply packet transmitting part 32, and a reply packet transmission control part 33.

The request packet receiving part 31 receives the request packet transmitted from the information processing apparatus 1 through a predetermined port of the communication processing apparatus 2. Moreover, the request packet receiving part 31 may include a receiving device for performing the reception (for example, a modem or a network card) or may not include the receiving device (in this case, the receiving device (not shown) is provided outside the request packet receiving part 31). Further, the request packet receiving part 31 may be implemented by hardware or may be implemented by software, such as a driver for driving the receiving device.

The reply packet transmitting part 32 transmits the reply packet to the port of the communication processing apparatus 2 through which the request packet being received by the request packet receiving part 31 and requesting the transmission of the reply packet passes. The transmission of the reply packet is performed under the control of the reply packet transmission control part 33 described below. The reply packet is, for example, a packet having a UDP header. A payload of the reply packet may include, for example, information for identifying the request packet received by the request packet receiving part 31 (for example, wait time information or other identification information). Moreover, the reply packet transmitting part 32 may include a transmitting device for performing the transmission (for example, a modem or a network card) or may not include the transmitting device (in this case, the transmitting device (not shown) is provided outside the reply packet transmitting part 32). Further, the reply packet transmitting part 32 may be implemented by hardware or may be implemented by software, such as a driver for driving the transmitting device.

The reply packet transmission control part 33 controls the transmission of the reply packet by the reply packet transmitting part 32 on the basis of the request packet received by the request packet receiving part 31. In this embodiment, the reply packet transmission control part 33 controls of the transmission of the reply packet on the basis of wait time information included in the request packet. When the wait time information included in the request packet is, for example, information indicating the wait time (for example, information indicating that the wait time is two minutes), the reply packet transmission control part 33 controls the reply packet transmitting part 32 to transmit the reply packet when the wait time (for example, two minutes) according to the wait time information lapses after the request packet receiving part 31 receives the request packet. Further, when the wait time information included in the request packet is, for example, information having a predetermined relationship with the wait time (for example, when the wait time is one minute and 58 seconds, information indicating two minutes obtained by adding two seconds to the wait time), the reply packet transmission control part 33 controls the reply packet transmitting part 32 to transmit the reply packet when the wait time (for example, one minute and 58 seconds) according to the wait time information lapses after the request packet receiving part 31 receives the request packet. Here, 'when the wait time lapses' may be when the wait time lapses or may be when a time relative to a control lapses from the accurate time when the wait time lapses.

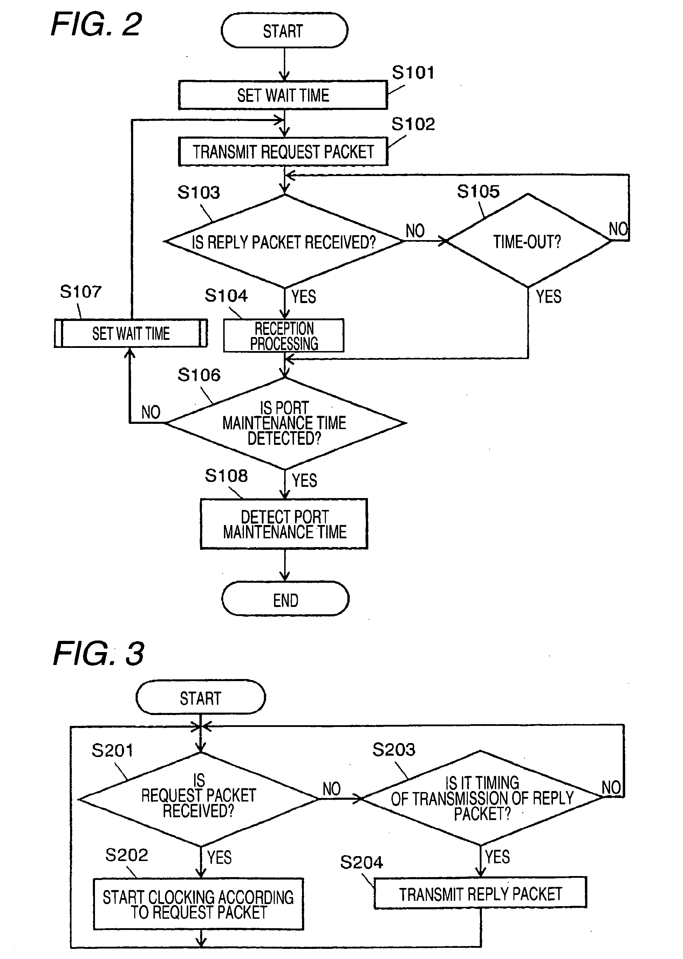

Next, the operation of the information processing system according to this embodiment will be described with reference to a flowchart. Fig. 2 is a flowchart showing the operation of the information processing apparatus 1 according to this embodiment.

(Step S101) The request packet transmission control part 14 sets a wait time corresponding to the request packet transmitted from the request packet transmitting part 11. Here, the setting of the wait time refers to, for example, recording of the wait time in a predetermined memory or the like.

(Step S102) The request packet transmitting part 11 transmits a request packet having wait time information according to the wait time set at Step S101 or Step S107 described below to the server apparatus 3.

(Step S103) The reply packet receiving part 12 judges, with respect to the request packet transmitted at Step S102, whether or not the reply packet transmitted from the server apparatus 3 is received. Then, when the reply packet is received, the process progresses to Step S104. When the reply packet is not received, the process progresses to Step S105.

(Step S104) The reply packet receiving part 12 performs a predetermined reception processing on the basis of the received reply packet. Here, the predetermined reception processing includes, for example, the delivery of the received reply packet or wait time information included in the reply packet to the port maintenance time detecting part 13 and the request packet transmission control part 14, and the storage of the wait time information included in the received reply packet in a predetermined memory.

(Step S105) The request packet transmission control part 14 judges whether or not it is time-out. Here, the time-out means that a timing, at which the request packet transmitting part 11 has to receive the reply packet corresponding to the request packet, has lapsed already. For example, the time-out may be judged when the wait time according to the wait time information included in the request packet lapses after the request packet transmitting part 11 receives the request packet. Alternatively, in consideration of a time when the request packet reaches the server apparatus 3 from the communication processing apparatus 2, a time when the reply packet reaches the communication processing apparatus 2 from the server apparatus 3, or a case where the transmission of the reply packet is delayed due to any trouble, the time-out may be judged when the request packet transmitting part 11 receives the request packet and then a time obtained by adding a predetermined time (for example, one or two seconds) to the wait time about the wait time information included in the request packet. When the time-out occurs, the process progresses to Step S106. When the time-out does not occur, the process returns to Step S103.

(Step S106) The request packet transmission control part 14 judges whether or not the port maintenance time is detected, that is, whether or not the transmission of the request packet is completed. For example, when the reply packet receiving part 12 receives the reply packet in response to the request packet transmitted by the request packet transmitting part 11 for the first time, it may be judged that the port maintenance time is detected. Alternatively, after the request packet is transmitted a predetermined number of times, it may be judged that the port maintenance time is detected. Further, when a difference between the wait time according to the wait time information included in the request packet transmitted by the request packet transmitting part 11 and a wait time according to wait time information included in a request packet transmitted immediately before the request packet is smaller than a predetermined value, it may be detected that the port maintenance time is detected. In addition, when a predetermined time lapses after the request packet transmitting part 11 transmits the request packet for the first time, it may be judged that the port maintenance time is detected. The specific examples will be described below. When the port maintenance time is detected, the purport is transferred to the port maintenance time detecting part 13, and then the process progresses to Step S108. When the port maintenance time is not detected, the process progresses to Step S107.

(Step S107) The request packet transmission control part 14 sets a wait time corresponding to a request packet to be newly transmitted using the dichotomizing search. Then, the process returns to Step S102. Here, the setting of the wait time using the dichotomizing search means setting, as a wait time of a request packet to be transmitted next, a middle wait time between a wait time corresponding to a reply packet to be received by the information processing apparatus 1 and a wait time corresponding to a reply packet to be not received by the information processing apparatus 1. By setting the wait time using the dichotomizing search in such a manner, the maximum wait time (port maintenance time) among wait times corresponding to reply packets to be received by the information processing apparatus 1 can be searched at high speed. In the setting of the wait time using the dichotomizing search, for example, when a reply packet corresponding to a first wait time cannot be received and a reply packet corresponding to a second wait time (shorter than the first wait time) can be received, a middle wait time (referred to as 'third wait time') between the first wait time and the second wait time is set as a wait time of a request packet to be transmitted next. Then, when a reply packet corresponding to the third wait time can be received, a middle wait time between the third wait time and the first wait time is set as a wait time of a request packet to be transmitted next. When the reply packet corresponding to the third wait time cannot be received, a middle wait time between the third wait time and the second wait time is set as the wait time of the request packet to be transmitted next. This processing is repeatedly performed. Moreover, the details of the setting processing will be described below.

(Step S108) The port maintenance time detecting part 13 detects the port maintenance time on the basis of the longest wait time among wait times corresponding to the reply packets received by the reply packet receiving part 12 till then. Then, a processing of detecting the port maintenance time of the communication processing apparatus 2 is completed.

Next, the operation of the server apparatus 3 will be described with reference to a flowchart of Fig. 3.

(Step S201) The request packet receiving part 31 judges whether or not the request packet is received. Then, when the request packet is received, the process progresses to Step S202 . When the request packet is not received, the process progresses to Step S203.

(Step S202) The reply packet transmission control part 33 starts clocking of the request packet received by the request packet receiving part 31. For example, the reply packet transmission control part 33 operates a timer for clocking the wait time according to the wait time information included in the received request packet. Then, the process returns to Step S201.

(Step S203) The reply packet transmission control part 33 judges whether or not it is a timing of the transmission of the reply packet. Here, whether or not it is the timing of the transmission of the reply packet is judged according to whether or not the wait time according to the wait time information lapses after clocking starts at Step S202, for example. Then, when it is the timing of the transmission of the reply packet, the process progresses to Step S204. When it is not the timing of the transmission of the reply packet, the process returns to Step S201.

(Step S204) The reply packet transmitting part 32 transmits the reply packet. The reply packet includes, for example, the wait time information included in the request packet received by the request packet receiving part 31. Then, the process returns to Step S201.

Moreover, in the flowchart of Fig. 3, the processing ends by power off or an interrupt of the end of the processing.

Next, the operation of the information processing system according to this embodiment will be described by way of specific examples. In the following specific examples, a case where the port maintenance time detecting part 13 transmits the request packet four times and then the port maintenance time is detected will be described. Moreover, in the following specific example 1, a description will be given for a case where, when the reply packet receiving part 12 receives a reply packet transmitted in response to a request packet transmitted by the request packet transmitting part 11 for the first time, the port maintenance time detecting part 13 detects the port maintenance time on the basis of a wait time according to wait time information of the request packet. Further, in the following specific example 2, a description will be described for a case where, when a reply packet corresponding to a transmitted request packet is received by the reply packet receiving part 12 and when all reply packets are received by the reply packet receiving part 12 till then, the request packet transmission control part 14 controls the request packet transmitting part 11 to transmit a request packet having wait time information according to a wait time longer than a wait time corresponding to the received reply packet.

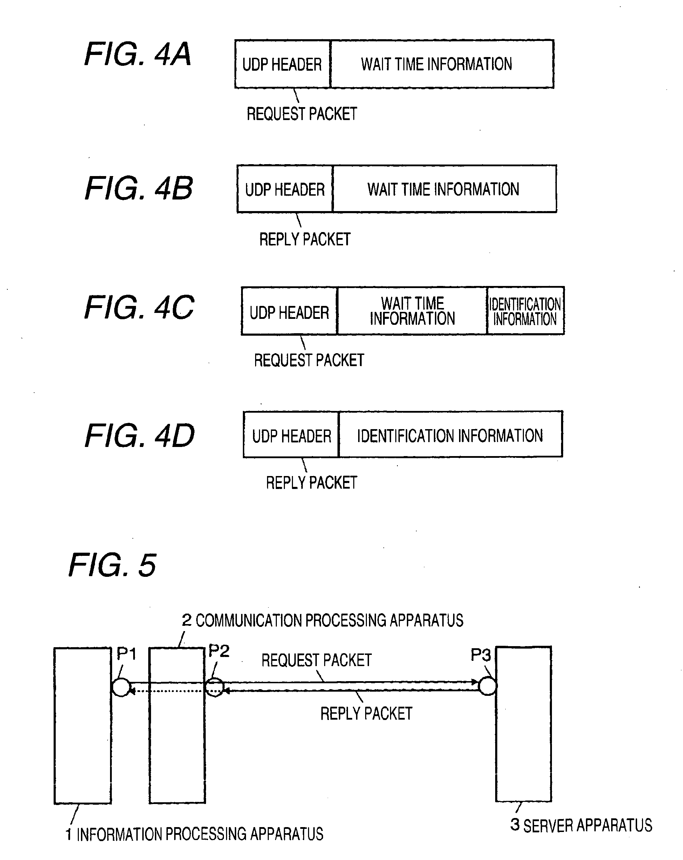

Figs. 4A and 4B are diagrams showing the configuration of a request packet and a reply packet in the following specific examples. The request packet and the reply packet all have the UDP header, and payloads thereof include wait time information. It is assumed that the wait time information included in the reply packet is the same as the wait time information included in the payload of the request packet requesting the transmission of the reply packet.

Fig. 5 is a diagram illustrating a port, through which the request packet and the reply packet pass, in the following specific examples. As shown in Fig. 5, the request packet to be transmitted from the information processing apparatus 1 is transmitted from a port P1. Then, the request packet passes through a port P2 of the WAN of the communication processing apparatus 2 and is then received at a port P3 of the server apparatus 3.

Here, the port P2 of the communication processing apparatus 2, through which the request packet passes, is newly allocated in the communication processing apparatus 2 when a first request packet passes through the port P2. That is, it is important to perform the transmission of the request packet using a port of the communication processing apparatus 2 that is not used for communication with other information processing apparatuses or server apparatuses. If not so, for example, when the port P2 is used for other purposes till then and different communication is performed through the port P2 from the transmission of the request packet to the transmission of the reply packet, the port maintenance time cannot be accurately detected. Moreover, in order to enable the port P2 to be newly allocated in the communication processing apparatus 2 when the first request packet passes therethrough, for example, a new port (a port that is not used for different communication till then) is preferably used as the port P1 of the information processing apparatus 1.

The reply packet that is received in response to the request packet transmitted from the information processing apparatus 1 is transmitted from the port P3 at which the request packet is received. When the port maintenance time does not lapses, the reply packet passes through the port P2 of the communication processing apparatus 2 and is then received at the port P1 of the information processing apparatus 1. Meanwhile, when the port maintenance time lapses, the reply packet is not transmitted from the communication processing apparatus 2 to the information processing apparatus 1. As will be apparent from Fig. 5, in the information processing system according to this embodiment, the request packet and the reply packet pass through the single port P2 of the communication processing apparatus 2. Moreover, when the request packet is transmitted from the port P1 to the port P3 after the port maintenance time relative to the port P2 lapses, a new port (for example, a port P4 different from the port P2) may be allocated in the communication processing apparatus 2. Further, the port P2 may be used again. This depends on the specification of the communication processing apparatus 2. In any case, however, the processing itself is not significantly changed (since the port P2 is merely changed to the port P4). Hereinafter, for convenience of explanation, a description will be given for a case where the port P2 is allocated with respect to the request packet from the port P1 of the information processing apparatus 1 after the port maintenance time lapses.

Further, the IP addresses of the information processing apparatus 1, the communication processing apparatus 2, and the server apparatus 3 are as follows. Moreover, the IP address of the communication processing apparatus 2 is an address of the WAN.
Information Processing Apparatus 1: 192.168.0.1
Communication Processing Apparatus 2: 202.132.10.6
Server Apparatus 3: 155.32.10.10

### (Specific Example 1)

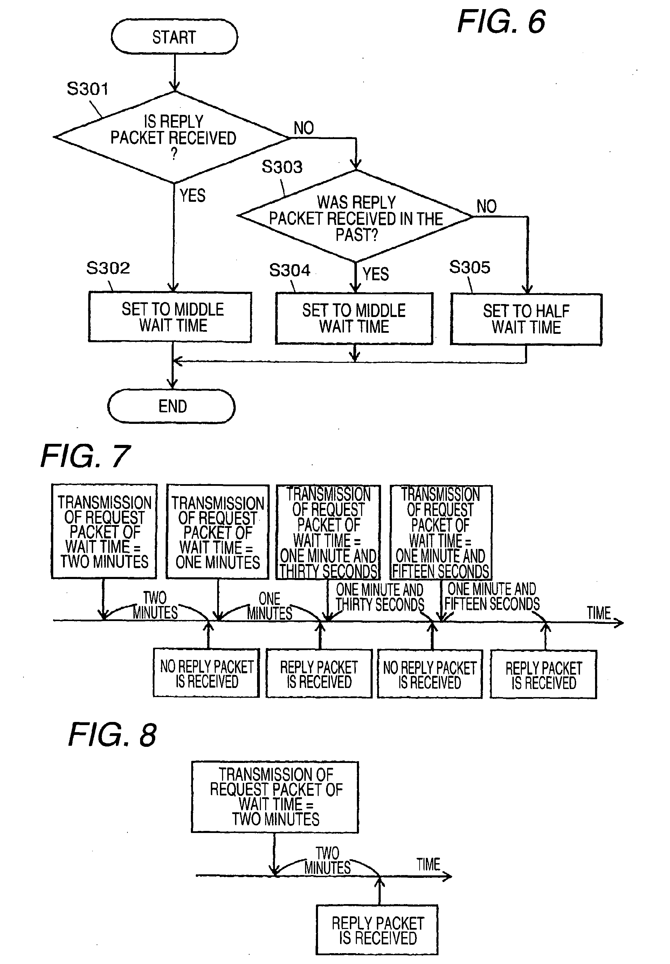

Fig. 6 is a flowchart showing a processing of Step S107 of the flowchart of Fig. 2 in this specific example.

(Step S301) The request packet transmission control part 14 judges whether or not a reply packet corresponding to a request packet most recently transmitted is received by the reply packet receiving part 12. That is, it is judged whether or not a reply packet is received at Step S103 or whether or not the time-out occurs at Step S105. Then, when the reply packet corresponding to the transmitted request packet is received by the reply packet receiving part 12, the process progresses to Step S302. When the reply packet corresponding to the transmitted request packet is not received by the reply packet receiving part 12, the process progresses to Step S303.

(Step S302) the request packet transmission control part 14 sets a wait time according to a middle wait time between the wait time corresponding to the reply packet most recently received and a shortest wait time among wait times corresponding to reply packets not received by the reply packet receiving part 12 till then as a wait time of the request packet to be transmitted next. Then, the processing of Step S107 ends.

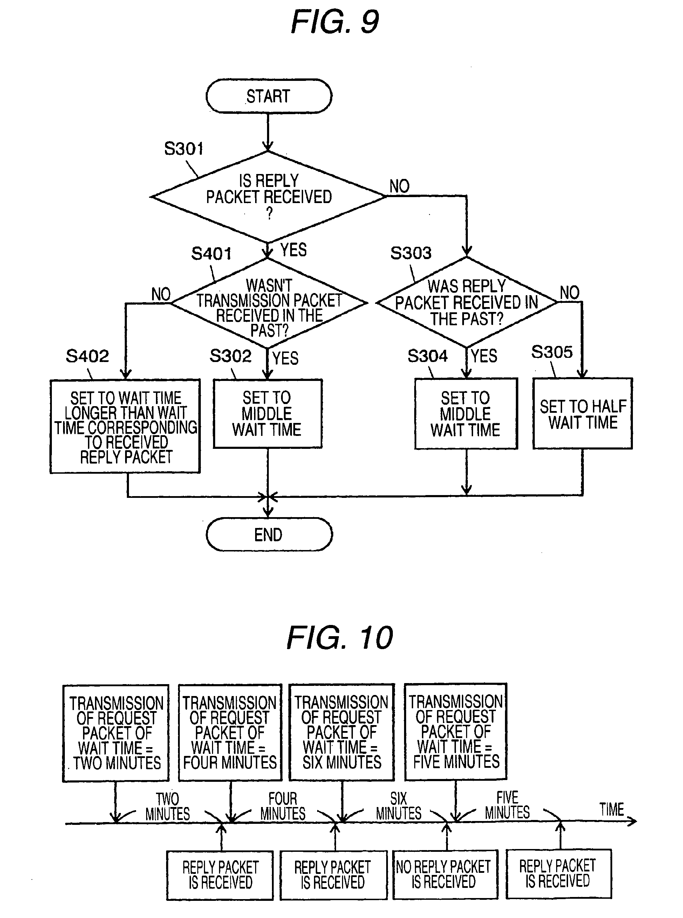

Moreover, in this specific example, when a reply packet corresponding to the request packet transmitted for the first time is received, the detection of the port maintenance time is performed. Accordingly, in the judgment at Step S107 (the flowchart of Fig. 6), when it is judged that the reply packet is received, a reply packet has not been received in advance. Therefore, the judgment on whether or not the reply packet was not received in the past is not performed, and the processing of Step S302 is performed (see a flowchart of Fig. 9 of a specific example 2).

(Step S303) The request packet transmission control part 14 judges whether or not the transmitted reply packet was received by the reply packet receiving part 12 in the past, that is, from when the request packet is transmitted for the first time until the judgment (the judgment at Step S303 at that time) . Then, when one or more reply packets are received by the reply packet receiving part 12 till then, the process progresses to Step S304. When no reply packet is received by the reply packet receiving part 12 till then, the process progresses to Step S305.

(Step S304) The request packet transmission control part 14 sets a middle wait time between a wait time corresponding to a reply packet not received most recently and the longest wait time among wait times of reply packets received by the reply packet receiving part 12 till then as a wait time of a request packet to be transmitted next. Then, the processing of Step S107 ends.

(Step S305) The request packet transmission control part 14 sets a wait time of half of the wait time corresponding to the reply packet not received most recently as a wait time of a request packet to be transmitted next. Then, the processing of Step S107 ends.

Here, a middle wait time between a wait time and a different wait time may be a middle wait time between both wait times in a strict sense or may be a wait time in the vicinity of the center of both wait times. In the latter case, for example, a wait time that is obtained by rounding the middle wait time between both wait times to an order smaller than one second (that is, an order on the basis of 0.1 second) is used.

In this specific example, it is assumed that the port maintenance time of the communication processing apparatus 2 is one minute and 20 seconds. First, if it is judged that it is a timing to detect the port maintenance time (for example, upon the initial start of the information processing apparatus 1 or the reset due to the replacement of the communication processing apparatus 2), the request packet transmission control part 14 of the information processing apparatus 1 sets the wait time to two minutes (Step S101). Then, the request packet transmitting part 11 generates wait time information indicating that the wait time is two minutes, and transmits a UDP request packet having the wait time information in its payload to the port P3 of the IP address 155.32.10.10 of the server apparatus 3 (Step S102). Thereafter, in the information processing apparatus 1, a processing of waiting the reception of the reply packet is performed until the reply packet corresponding to the request packet is received or until the time-out occurs (Steps S103 and S105).

In the request packet transmitted from the information processing apparatus 1, a source address is converted from 192.168.0.1 to 202.132.10.6 and a source port is converted from the port P1 to the port P2 by the communication processing apparatus 2. Then, the request packet is transmitted to the port P3 of the server apparatus 3. The request packet is received by the request packet receiving part 31 of the server apparatus 3 (Step S201). Next, in the reply packet transmission control part 33, the timer operates (Step 5202). If the timers passes two minutes that is the wait time indicated by the wait time information included in the request packet, the reply packet transmission control part 33 judges that it is the timing to transmit the reply packet (Step S203), and instructs the reply packet transmitting part 32 to transmit a reply packet having the wait time information included in the request packet received by the request packet receiving part 31 to the port P2 of the IP address 202.132.10.6 of the communication processing apparatus 2 as the transmission source of the request packet. Then, the reply packet transmitting part 32 transmits the reply packet having the wait time information indicating the wait time 'two minutes' to the port P2 of the communication processing apparatus 2 (Step S204).

Since the port maintenance time of the communication processing apparatus 2 is 'one minute and 20 seconds', the reply packet transmitted from the server apparatus 3 is not subject to the address conversion in the communication processing apparatus 2, such that the reply packet is not transmitted to the information processing apparatus 1. Accordingly, the request packet transmission control part 14 of the information processing apparatus 1 judges that the time-out occurs when a time obtained by adding five seconds (the five seconds are set in consideration of the transmission time of the request packet and the like) to two minutes as the wait time, that is, two minutes and five seconds lapse after the request packet having the wait time information indicating the wait time ' two minutes' is transmitted (Step S105). In this case, since the request packet is not transmitted four times and the reply packet receiving part 12 does not receive the reply packet corresponding to the request packet transmitted for the first time, it is judged that the port maintenance time is not detected (Step S106). Further, in this case, since the reply packet corresponding to the transmitted request packet is not received by the reply packet receiving part 12 (Step S301) and no reply packet is received by the reply packet receiving part 12 till then (Step S303), the request packet transmission control part 14 controls the request packet transmitting part 11 to transmit a request packet having wait time information indicating a wait time 'one minute' of half of the wait time 'two minutes' corresponding to the unreceived reply packet. Specifically, the request packet transmission control part 14 sets the wait time of one minute (Steps S305 and S107).

Then, in the same manner of the above-descried processing, the request packet having the wait time information indicating the wait time 'one minute' is retransmitted to the server apparatus 3 through the port P2 of the communication processing apparatus 2 (Step S102). Next, after one minute from when the server apparatus 3 receives the request packet, the reply packet is transmitted from the server apparatus 3.

The reply packet is subject to the address conversion in the communication processing apparatus 2 and is then transmitted to the information processing apparatus 1. Next, the reply packet is received by the reply packet receiving part 12 (Step S103), the wait time one minute' indicated by the wait time information included in the reply packet is delivered to the port maintenance time detecting part 13 and the request packet transmission control part 14. Moreover, it is assumed that the port maintenance time detecting part 13 stores the received wait time 'one minute' in a storage unit (not shown) (Step S104).

In this case, since the request packet is not transmitted four times, it is also judged that the port maintenance time is not detected (Step S106). Further, in this case, since the reply packet corresponding to the wait time of one minute is received by the reply packet receiving part 12 (Step S301) and the reply packet corresponding to the wait time of two minutes is not received, a middle wait time 'one minute and thirty seconds' between the wait time 'one minute' corresponding to the received reply packet and the wait time 'two minutes' corresponding to the unreceived reply packet by the reply packet receiving part 12 till then is set as a wait time (Steps S302 and S107). Next, in the same manner as the above-described processing, a request packet having wait time information indicating the wait time 'one minute and thirty seconds' is retransmitted to the server apparatus 3 through the port P2 of the communication processing apparatus 2 (Step S102). Next, a reply packet is transmitted from the server apparatus 3 after one minute and thirty seconds from when the server apparatus 3 receives the request packet.

Since the port maintenance time of the communication processing apparatus 2 is 'one minute and twenty seconds', the reply packet transmitted from the server apparatus 3 is not subject to the address conversion in the communication processing apparatus 2, such that the reply packet is not transmitted to the information processing apparatus 1. Accordingly, the request packet transmission control part 14 of the information processing apparatus 1 judges that the time-out occurs (Step S105). In this case, since the request packet is not transmitted four times, it is judged that the port maintenance time is not detected (Step S106).

Further, in this case, since a reply packet corresponding to the wait time of one minute and thirty seconds is not received by the reply packet receiving part 12 (Step S301) and one or more reply packets are received by the reply packet receiving part 12 till then (Step S303), a middle wait time 'one minute and fifteen seconds' between the wait time 'one minute and thirty seconds' corresponding to the unreceived reply packet and the longest wait time 'one minute' among the wait times corresponding to the reply packets received by the reply packet receiving part 12 till then is set to the wait time (Steps S304 and S107). Next, in the same manner as the above-described processing, a request packet having wait time information indicating the wait time 'one minute and fifteen seconds' is retransmitted to the server apparatus 3 through the port P2 of the communication processing apparatus 2 (Step S102). Next, a reply packet is transmitted from the server apparatus 3 after one minute and fifteen seconds from when the server apparatus 3 receives the request packet.

Since the port maintenance time of the communication processing apparatus 2 is 'one minute and twenty seconds', the reply packet transmitted from the server apparatus 3 is subject to the address conversion in the communication processing apparatus 2, and then the reply packet is transmitted to the information processing apparatus 1. Next, the reply packet is received by the reply packet receiving part 12 (Step S103), wait time 'one minute and fifteen seconds' indicated by the wait time information included in the reply packet is delivered to the port maintenance time detecting part 13 and the request packet transmission control part 14. Moreover, it is assumed that the port maintenance time detecting part 13 stores the received wait time 'one minute and fifteen seconds' in a storage unit (not shown) (Step S104).

At this time, since the request packet is transmitted four times in total, the request packet transmission control part 14 judges that it is a timing to detect the port maintenance time (Step S106) . Next, the port maintenance time detecting part 13 detects the longest wait time 'one minute and fifteen seconds' among the wait times received from the reply packet receiving part 12 as the port maintenance time of the communication processing apparatus 2 (Step S108).

Thereafter, the detected port maintenance time is stored in, for example, a predetermined recording medium (not shown), and is used as a cycle for transmitting the packet to the server apparatus 3 at regular intervals. Here, the detected port maintenance time may be used by the information processing apparatus 1 or may be used by other information processing apparatuses connected to the LAN of the communication processing apparatus 2. Further, the transmission source of the packet to be transmitted at regular intervals using the port maintenance time may be the server apparatus 3 or may be other server apparatuses. In addition, a time shorter than the detected port maintenance time may be set to the transmission cycle of the packet to be transmitted at regular intervals.

Fig. 7 is a diagram illustrating the transmission of the request packet and the reception (or unreception) of the reply packet in this specific example. In this case, the request packets corresponding to the wait times 'two minutes', 'one minute', 'one minute and thirty seconds', and 'one minute and fifteen seconds' are transmitted, and the reply packets corresponding to the wait times 'one minute' and 'one minute and fifteen seconds' can be received. Accordingly, the port maintenance time is detected as one minute and fifteen seconds.

Moreover, in this specific example, a case where the port maintenance time of the communication processing apparatus 2 is 'one minute and twenty seconds' has been described. However, when the port maintenance time of the communication processing apparatus 2 is 'five minutes', the reply packet corresponding to the request packet transmitted for the first time is received in the information processing apparatus 1. In this case, at the time when the first reply packet is received, it is judged that it is a timing to detect the port maintenance time (Step S106), and the port maintenance time is detected as two minutes (Step S108) . Fig. 8 is a diagram illustrating the transmission of the request packet and the reception of the reply packet in the above-described case.

### (Specific Example 2)

Fig. 9 is a flowchart showing a processing of Step S107 of the flowchart of Fig. 2 in this specific example. Moreover, other processing excluding Steps S401 and S402 is the same as that in the flowchart of Fig. 6, and thus the description thereof will be omitted.

(Step S401) The request packet transmission control part 14 judges whether or not the transmitted reply packet cannot be received by the reply packet receiving part 12 in the past, that is, from when the first request packet is transmitted until the judgment. Next, when a reply packet not received by the reply packet receiving part 12 exists till then, the process progresses to Step S302. When all reply packets are received by the reply packet receiving part 12, the process progresses to Step S402.

(Step S402) The request packet transmission control part 14 sets a wait time longer than the wait time corresponding to the reply packet received most recently as a wait time of a request packet to be transmitted next. Then, the processing of Step S107 ends.

Here, the wait time longer than a wait time may be, for example, a wait time obtained by adding a predetermined time (for example, two minutes) to a wait time or may be a wait time obtained by multiplying a wait time by a value larger than 1 (for example, two times as much as a wait time).

In this specific example, a processing relative to the transmission of the request packet and a processing relative to the reception or unreception of the reply packet is the same as those of the specific example 1, and thus the detailed descriptions thereof will be omitted. The processing will be described with reference to Fig. 10. Fig. 10 is a diagram illustrating the transmission of the request packet and the reception or unreception of the reply packet in this specific example. Moreover, in this specific example, it is assumed that the port maintenance time of the communication processing apparatus 2 is 'five minutes and thirty seconds' .

Further, in this specific example, a description will be give for a case where, when the reply packet corresponding to the transmitted request packet is received by the reply packet receiving part 12 and when all reply packets are received by the reply packet receiving part 12 till then, the request packet transmission control part 14 controls the request packet transmitting part 11 to transmit a request packet corresponding to a wait time obtained by adding two minutes to the wait time corresponding to the received reply packet.

As shown Fig. 10, in this specific example, it is first assumed that the request packet having wait time information indicating the wait time of two minutes is transmitted (Step S102). Further, it is assumed that a reply packet transmitted in response to the request packet is received by the reply packet receiving part 12 (Step S103). Then, since the reply packet corresponding to the wait time 'two minutes' is received and it is the transmission of the first reply packet, the request packet transmission control part 14 judges that all reply packets are received till then (Steps S301 and S401), and controls a transmission of a request packet having wait time information indicating a wait time of four minutes by adding two minutes to the wait time 'two minutes' corresponding to the received reply packet (Steps S402, S107, and S102).

It is assumed that the reply packet transmitted in response to the request packet is received by the reply packet receiving part 12 (Step S103). Then, since the reply packet corresponding to the wait time 'four minutes' is received and all the reply packets transmitted in response to the request packets transmitted first and second, the request packet transmission control part 14 judges that all the reply packets are received till then (Steps S301 and S401), and controls a transmission of a request packet having wait time information indicating a wait time of six minutes obtained by adding two minutes to the wait time 'four minutes' corresponding to the received reply packet (Steps S402, S107, and S102).

The reply packet transmitted in response to the above request packet is not transmitted to the information processing apparatus 1. This is because the port maintenance time in the communication processing apparatus 2 lapses. Accordingly, the request packet transmission control part 14 of the information processing apparatus 1 judges that the time-out occurs (Step S105).

In this case, the reply packet corresponding to the wait time of six minutes is not received by the reply packet receiving part 12 (Step S301), and one or more reply packets are received by the reply packet receiving part 12 till then (Step S303). Accordingly, a middle wait time 'five minutes' between the wait time six minutes' corresponding to the unreceived reply packet and the longest wait time 'four minutes' among the wait times corresponding to the reply packets received by the reply packet receiving part 12 till then is set to a wait time (Steps S304 and S107). Next, in the same manner of the above-described processing, the request packet having the wait time information indicating the wait time 'five minutes' is transmitted to the server apparatus 3 through the port P2 of the communication processing apparatus 2 (Step S102). Next, a reply packet is transmitted from the server apparatus 3 after five minutes from when the server apparatus 3 receives the request packet.

The reply packet is subject to the address conversion in the communication processing apparatus 2, and is then transmitted to the information processing apparatus 1, Next, the reply packet is received by the reply packet receiving part 12 (Step S103), and the wait time 'five minutes' indicated by the wait time information included in the reply packet is delivered to the port maintenance time detecting part 13 and the request packet transmission control part 14, Moreover, it is assumed that the port maintenance time detecting part 13 stores the received wait time 'five minutes' in a storage unit (not shown) (Step S104).

At this time, since the request packet is transmitted four times in total, the request packet transmission control part 14 judges that it is the timing to detect the port maintenance time (Step S106). Then, the port maintenance time detecting part 13 detects the longest wait time five minutes' among the wait times received from the reply packet receiving part 12 till then as the port maintenance time of the communication processing apparatus 2 (Step S108).

As described above, according to the information processing system of this embodiment, the transmission of the request packet can be controlled and the port maintenance time can be detected using the dichotomizing search. Therefore, the port maintenance time can be efficiently detected.

For example, when the port maintenance time of the communication processing apparatus 2 is five minutes and thirty seconds, in case of using the dichotomizing search, as described with reference to Fig. 10, in disregard of a time from the reception of the reply packet to the transmission of the next request packet, the fact that the port maintenance time is five minutes can be detected in seventeen minutes from the transmission of the first request packet. In this case, an error of the port maintenance time is one minute. This is because a difference between the wait time corresponding to the request packet transmitted last and the wait time corresponding to the request packet transmitted immediately before the request packet transmitted last is one minute. Meanwhile, when the detection of the port maintenance time is performed at a time when the request packets are transmitted while the wait time sequentially increases by minute from two minutes, but the reply packets transmitted in response to the request packets cannot be received, five packets of the wait times of two minutes, three minutes, four minutes, five minutes, and six minutes are transmitted, and it takes twenty minutes to detect the port maintenance time. In this case, an error of the port maintenance time is also one minute. This is because the wait time increases by minute. As such, the detection of the port maintenance time can be efficiently performed using the dichotomizing search.

Further, by appropriately setting the timing to detect the port maintenance time, the port maintenance time can be detected at necessary and sufficient accuracy. For example, in order to detect an accurate port maintenance time, the number of request packets to be transmitted until the port maintenance time is detected may be set to a large value. Further, in order to detect a schematic port maintenance time, the number of request packets to be transmitted until the port maintenance time is detected may be made small.

In this embodiment, as shown in Fig. 4A, a case where only the wait time is included in the request packet has been described. Alternatively, as shown in Fig. 4C, the wait time and identification information may be included in the request packet, and, as shown in Fig. 4D, identification information included in the request packet may be included in the reply packet to be transmitted in response to the request packet. In this case, the information processing apparatus 1 that receives the reply packet can know the wait time corresponding to the reply packet with reference to information indicating the correspondence between the wait time information and the identification information (information previously stored in the information processing apparatus 1 or a device that is accessible by the information processing apparatus 1).

### (Second Embodiment)

An information processing system according to a second embodiment of the invention will be described with reference to the drawings. The information processing system according to this embodiment performs the detection of the port maintenance time in consideration of the transmission time of the request packet and the reply packet.

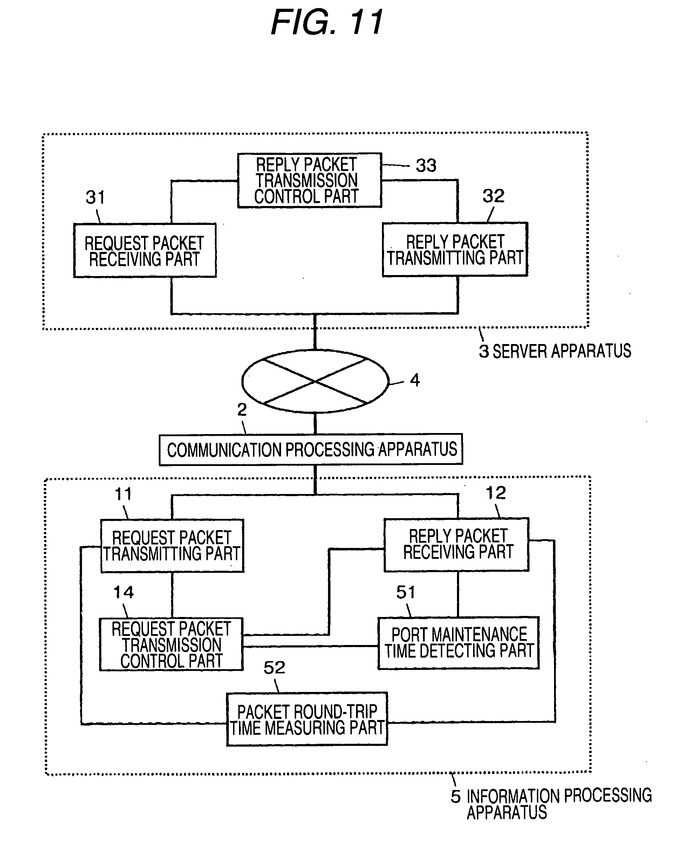

Fig. 11 is a block diagram showing the configuration of an information processing system according to this embodiment. In Fig. 11, the information processing system according to this embodiment includes an information processing apparatus 5, a communication processing apparatus 2, and a server apparatus 3. The communication processing apparatus 2 and the server apparatus 3 are the same as those described in the first embodiment, and thus the descriptions thereof will be omitted. Although the information processing apparatus 5 corresponds to the information processing apparatus 1 in the first embodiment, in this embodiment, the information processing apparatus 5 performs the detection of the port maintenance time in consideration of the transmission time of the request packet and the reply packet.

The information processing apparatus 5 includes a request packet transmitting part 11, a reply packet receiving part 12, a request packet transmission control part 14, a port maintenance time detecting part 51, and a packet round-trip time measuring part 52. Moreover, the configuration and operation of the request packet transmitting part 11, the reply packet receiving part 12, and the request packet transmission control part 14 are the same as those in the first embodiment, except that the detection of the port maintenance time is performed in consideration of the transmission time of the request packet and the reply packet, and thus the descriptions thereof will be omitted.

The port maintenance time detecting part 51 detects the port maintenance time on the basis of a round-trip time of the packet between the information processing apparatus 5 and the server apparatus 3. Other processing is the same as the port maintenance time detecting part 13 according to the first embodiment, and thus the description will be omitted.

The packet round-trip time measuring part 52 causes the request packet transmitting part 11 to transmit a request packet requesting an immediate transmission of a reply packet, and measures a packet round-trip time that is a time from the transmission of the request packet until the reply packet transmitted according to the request packet is received by the reply packet receiving part 12. The packet round-trip time measured by the packet round-trip time measuring part 52 is used for the detection of the port maintenance time, as described above.

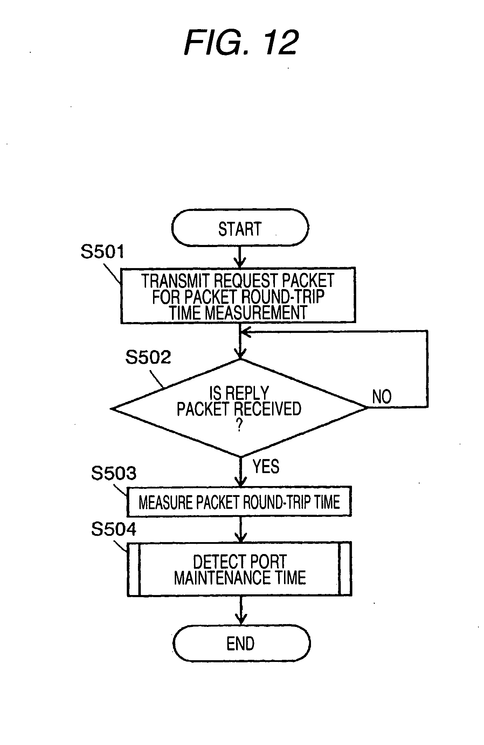

Next, the operation of the information processing apparatus 5 of this embodiment will be described with reference to the flowchart of Fig. 12.

(Step S501) The packet round-trip time measuring part 52 controls the request packet transmitting part 11 to transmit a request packet for measuring the packet round-trip time. Then, the request packet transmitting part 11 transmits the request packet according to the control of the packet round-trip time measuring part 52. Here, the request packet for measuring the packet round-trip time is a request packet requesting the immediate transmission of the reply packet, for example, a request packet having wait time information indicating a wait time '0 second'. Moreover, the packet round-trip time measuring part 52 starts clocking to measure the packet round-trip time from when the request packet is transmitted.

(Step S502) The reply packet receiving part 12 judges whether or not the reply packet transmitted from the server apparatus 3 in response to the request packet transmitted at Step S501 is received. Next, when the reply packet is received, a purport indicating that the reply packet is received is sent to the packet round-trip time measuring part 52, and then the process progresses to Step S503. When the reply packet is not received, the processing Step S502 is repeatedly performed until the reply packet is received.

(Step S503) If the reply packet is received at Step S502, the packet round-trip time measuring part 52 stops clocking started at Step S501, and sets a clocked value at that time (that is, a time from the transmission of the request packet to the reception of the reply packet) as the packet round-trip time.

(Step S504) The information processing apparatus 5 detects the port maintenance time using the packet round-trip time measured by the packet round-trip time measuring part 52. The detection processing of the port maintenance time is the same as the processing of the flowchart shown in Fig. 2 in the first embodiment, except that, in the detection processing (Step S108) of the port maintenance time by the port maintenance time detecting part 51, the port maintenance time is detected in consideration of the packet round-trip time, and the description will be omitted.

Moreover, in the flowchart of Fig. 12, a case where the packet round-trip time is measured before the detection processing (Step S504) of the port maintenance time has been described. However, as regards the measurement of the packet round-trip time, a measurement timing does not matter insofar as the measurement is performed before the processing of Step S108 in the flowchart of Fig. 2. For example, the measurement of the packet round-trip time may be performed after the request packet having wait time information indicating a wait time other than '0 second' is transmitted.

Next, the operation of the information processing apparatus 5 according to this embodiment will be described by way of specific examples.

The packet round-trip time measuring part 52 instructs the request packet transmitting part 11 to transmit the request packet having the wait time information indicating the wait time of '0 second' to the server apparatus 3. Then, the request packet transmitting part 11 transmits the request packet having the instructed wait time information to the server apparatus 3 through the communication processing apparatus 2 (Step S501). The packet round-trip time measuring part 52 operates a timer at a timing at which the request packet is transmitted and starts clocking.

The transmitted request packet is transmitted to the server apparatus 3 in the same manner as the description in the specific example of the first embodiment, and is then received by the request packet receiving part 31 (Step S201) . Since the wait time corresponding to the received request packet is '0 second', the reply packet transmission control part 33 judges that an immediate reply is to be performed (Steps S202 and S203), and instructs the reply packet transmitting part 32 to transmit the reply packet to the communication processing apparatus 2 as the transmission source of the request packet. According to this instruction, the reply packet transmitting part 32 transmits a reply packet having wait time information indicating a wait time '0 second' in its payload to the communication processing apparatus 2 (Step S204). The reply packet is subject to the address conversion in the communication processing apparatus 2, and is then transmitted to the information processing apparatus 5. Next, the reply packet receiving part 12 receives the reply packet (Step S502), and delivers, to the packet round-trip time measuring part 52, a purport that the reply packet is received. The packet round-trip time measuring part 52 stops the timer started upon the transmission of the request packet, and sets a value of the timer as the packet round-trip time (Step S503). Here, it is assumed that the packet round-trip time of 'one second' is measured. The packet round-trip time measuring part 52 delivers the measured packet round-trip time 'one second' to the port maintenance time detecting part 51.

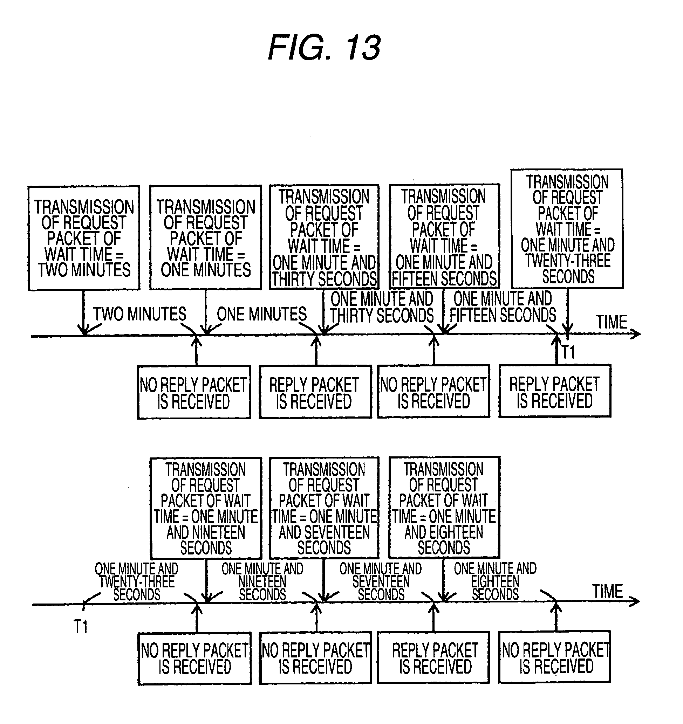

Thereafter, the information processing apparatus 5 transmits the request packet and detects the port maintenance time in the same manner as the specific example of the first embodiment. Fig. 13 is a diagram showing the transmission of the request packet and the reception (or unreception) of the reply packet in this specific example. As will be apparent from Fig. 13, in this specific example, when, starting with the wait time of two minutes, a difference between the wait time according to the wait time information included in the request packet transmitted from the request packet transmitting part 11 and the wait time according to the wait time information of the request packet immediately before the request packet is one second or less, the transmission of the request packet ends, and the port maintenance time is detected.

In this specific example, as shown in Fig. 13, it is assumed that, after a request packet corresponding to a wait time of one minute and seventeen seconds is transmitted, a reply packet corresponding to the request packet is received by the reply packet receiving part 12. Thereafter, after a request packet corresponding to a wait time of one minute and eighteen seconds is transmitted, when a reply packet corresponding to the request packet is not received and the time-out occurs, it is judged that it is a timing to detect the port maintenance time, and then the detection of the port maintenance time is performed.

The port maintenance time detecting part 51 detects 'one minute and eighteen seconds' obtained by adding the packet round-trip time 'one second' to the longest wait time 'one minute and seventeen seconds' among the wait times corresponding to the reply packets received by the reply packet receiving part 12 as the port maintenance time of the communication processing apparatus 2 (Step S108).

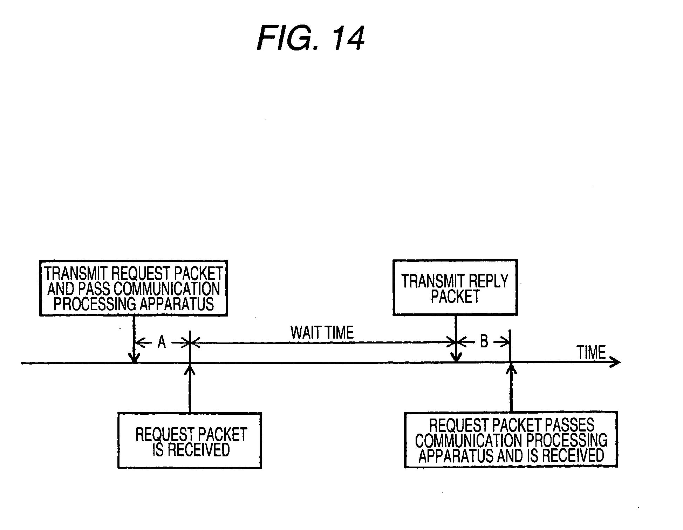

Here, a case where the port maintenance time of the communication processing apparatus 2 becomes a time obtained by adding the longest wait time among the wait times corresponding to the reply packets received by the reply packet receiving part 12 and the packet round-trip time with reference to Fig. 14. Fig. 14 is a diagram showing a time from the transmission of the request packet to the reception of the reply packet. Moreover, in Fig. 14, it is assumed that a time from the transmission of the request packet by the information processing apparatus 5 until the request packet passes through the communication processing apparatus 2 and a time from when the reply packet passes through the communication processing apparatus 2 until the reply packet is received by the information processing apparatus 5 are negligible.

In Fig. 14, it is assumed that a time from when the request packet is transmitted and passes through the communication processing apparatus 2 until the request packet is received by the server apparatus 3 is set to 'time A' . When the wait time corresponding to the request packet lapses after the server apparatus 3 receives the request packet, if the reply packet is transmitted, a time from the reception of the request packet by the server apparatus 3 to the transmission of the reply packet becomes a wait time. Further, it is assumed that a time from when the reply packet is transmitted until the reply packet passes through the communication processing apparatus 2 and is received by the information processing apparatus 5 is set to 'time B'. Then, in the case shown in Fig. 14, the port P2 of the communication processing apparatus 2 is maintained during a period of 'wait time + time A + time B'. Here, since the sum of the time A and the time B becomes the packet round-trip time, a time obtained by adding the packet round-trip time to the longest wait time corresponding to the received reply packet becomes the port maintenance time.

As described above, in the information processing system according to this embodiment, the port maintenance time is detected in consideration with the round-trip time of the packet between the communication processing apparatus 2 and the server apparatus 3 (actually, a round-trip time of the packet between the information processing apparatus 5 and the server apparatus 3 is measured). Accordingly, a more accurate port maintenance time can be detected.

In this embodiment, a case where the packet round-trip time is considered upon the detection processing of the port maintenance time by the port maintenance time detecting part 51 has been described, but this is just an example. Alternatively, the port maintenance time may be detected on the basis of the measured packet round-trip time. That is, the packet round-trip time may be used in any step of detecting the port maintenance time. For example, the wait time information included in the request packet to be transmitted may be changed using the packet round-trip time. Further, in the server apparatus 3, a timing to transmit the reply packet may be changed using the packet round-trip time. For example, in a case where a request packet having wait time information indicating a wait time of thirty seconds is transmitted, when a request packet having wait time information of a wait time of twenty-nine seconds obtained by subtracting the packet round-trip time (one second) from the wait time is transmitted and the a reply packet transmitted in response to the request packet is received, the detection of the port maintenance time may be detected on an assumption that the wait time corresponding to the reply packet is thirty seconds.

In this embodiment, a case where the detection of the port maintenance time and the measurement of the packet round-trip time are performed by the same apparatus has been described. However, both may be performed by different devices. Then, using the packet round-trip time detected by one device, the detection of the port maintenance time may be detected using the other device.

In the embodiments, a case where the request packet includes the wait time information has been described. Alternatively, instead of the wait time information, time information indicating the time when the reply packet is transmitted may be included in the request packet. For example, a request packet having time information indicating the time when a predetermined wait time lapses after a request packet is transmitted may be transmitted to the server apparatus, and a reply packet may be transmitted from the server apparatus at the time indicated by the time information included in the request packet in response to the request packet. Then, like the above embodiments, the detection of the port maintenance time can be performed. Here, as regards the detection of the port maintenance time, for example, since the request packet corresponding to the reply packet received by the reply packet receiving part is transmitted, the longest time among the times until the reply packet is received is detected as the port maintenance time. Moreover, when a request packet having time information is used, for example, it is necessary to synchronize clocks of the information processing apparatus 1 and the server apparatus 3 using a timer server. As such, the request packet transmission control part 14 may control the transmission of the request packet by the request packet transmitting part 11 using the dichotomizing search on the basis of whether or not the reply packet is received by the reply packet receiving part 12. Further, the port maintenance time detecting parts 13 and 51 may detect the port maintenance time of the communication processing apparatus 2 on the basis of the reply packet received by the reply packet receiving part 12. In addition, the reply packet transmission control part 33 may control the transmission of the reply packet on the basis of the request packet received by the request packet receiving part 31.

In the above embodiments, as shown in Fig. 5, a case where the request packet is transmitted using only one port P2 of the communication processing apparatus 2 has been described. Alternatively, whenever the request packet is transmitted, the port of the communication processing apparatus 2 through which the request packet passes may be changed. That is, the fact that the request packet is transmitted through one port of the communication processing apparatus 2 means that the number of ports of the communication processing apparatus 2 to be used at one time is one. Specifically, when a plurality of request packets are transmitted, all the request packets may be transmitted through a single port of the communication processing apparatus 2 or the plurality of request packets may be transmitted through two or more ports of the communication processing apparatus 2. However, in the latter case, since the number of ports to be used at one time is one, two or more request packets are not transmitted through two or more ports simultaneously.

In the above embodiments, a case where the request packet and the reply packet are UDP packets has been described. Alternatively, the request packet and the reply packet may be TCP packets. Other packets may be used insofar as the port maintenance time can be detected.

In the above embodiments, a case where the transmission timing of the reply packet is clocked using the timer has been described. Alternatively, instead of the timer, for example, a clock or a clock signal may be used. A clocking unit does not matter.

In the above embodiments, a case where the payloads of the request packet and the reply packet include information, such as the wait time information and the like, has been described. However, the configurations of the packets are not limited to the above descriptions, but other configurations may be used. Further, the payload of the reply packet may not include significant information (that is, a dummy packet). For example, in a case where, after the request packet transmitting part 11 transmits the request packet, a corresponding wait time lapses, when a dummy reply packet can be received, it may be judged that the reply packet is received. When the reply packet cannot be received, it may be judged that the reply packet cannot be received.

For example, when the information processing apparatus and the server apparatus have the same dichotomizing search algorithm, the request packet to be transmitted from the information processing apparatus to the server apparatus may include information indicating a transmission interval of the reply packet increases or decreases, not the wait time. Then, on the basis of the information, the server apparatus may judge a timing to transmit the reply packet and may transmit the reply packet. Specifically, in Fig. 7, in the first request packet, information instructing to start the detection of the port maintenance time may be included in the request packet. In response to the request packet, the server apparatus transmits the reply packet after two minutes from when the request packet is received. If it is assumed that the reply packet is not received by the information processing apparatus, a request packet including information instructing to decrease the transmission interval of the reply packet is transmitted to the server apparatus. Then, the reply packet is transmitted after one minute from when the request packet is received. By repeatedly performing such a processing the transmission of the request packet and the transmission of the reply packet may be performed, and the port maintenance time may be detected.

In the above embodiments, for example, when a reply packet corresponding to a transmitted request packet is not received by the reply packet receiving part 12 and when one or more reply packets are received by the reply packet receiving part 12 till then, the request packet transmission control part 14 may control the request packet transmitting part 11 to transmit a request packet having wait time information according to a wait time between a wait time (referred to as ' first wait time') corresponding to the unreceived reply packet and the longest wait time (referred to as 'second wait time') among wait times corresponding to reply packets received by the reply packet receiving part 12 till then. Further, for example, when the reply packet corresponding to the transmitted request packet is received by the reply packet receiving part 12 and when a reply packet not received by the reply packet receiving part 12 exists till then, the request packet transmission control part 14 may control the request packet transmitting part 11 to transmit a request packet having wait time information according to a wait time between a wait time corresponding to the received reply packet and the shortest wait time among wait times corresponding to reply packets not received by the reply packet receiving part 12 till then. Here, the wait time between the first wait time and the second wait time may be, for example, a time obtained by adding a time, which is obtained by multiplying a time obtained by subtracting the second wait time from the first wait time by 2/3, to the first wait time.

In the above embodiments, the setting of the wait time using the dichotomizing search may be the setting of a wait time between a wait time corresponding to a reply packet that can be received by the information processing apparatus 1 and a wait time corresponding to a reply packet that cannot be received by the information processing apparatus 1 as a wait time of a request packet to be transmitted next. That is, for example, when a reply packet corresponding to a transmitted request packet is not received by the reply packet receiving part 12 and when no reply packet is received by the reply packet receiving part 12 till then, the request packet transmission control part 14 may control the request packet transmitting part 11 to transmit a request packet having wait time information according to a wait time shorter than a wait time (referred to as 'third wait time') corresponding to a wait time corresponding to the unreceived reply packet. Here, the wait time shorter than the third wait time is a time longer than 0 and shorter than the third wait time, for example, a time obtained by multiplying the third wait time by 2/3.

In the above embodiments, a case where the connection to the communication line 4 is established through one communication processing apparatus has been described. Alternatively, the connection to the communication line 4 may be established through a plurality of communication processing apparatuses (that is, a multi-connection communication processing apparatus is used). In the multi-connection communication processing apparatus, the shortest port maintenance time is detected.

In the above embodiments, it has been described that the communication processing apparatus 2 has the NAT function (that is, performs the address conversion). However, the communication processing apparatus 2 may have a firewall of packet filtering, instead of or in addition to the NAT function. Here, packet filtering performs, for example, selection of a reception packet on the basis of the above-described reception filtering rule. For the communication processing apparatus 2 having such a firewall function, the port maintenance time can be detected using the method according to the above embodiments. Here, when a predetermined time lapses after the last packet passes through a port of the communication processing apparatus 2 and the packet transmitted to the port from the WAN is not transmitted to the LAN of the communication processing apparatus 2, the port maintenance time of the communication processing apparatus 2 having the firewall function means the predetermined time.

In the above embodiments, when UDP request packets and reply packets are transmitted, a plurality of request packets and reply packets having the same contents may be transmitted simultaneously in consideration of a packet loss (since the UDP is connectionless communication, the packet loss may occur).

In the above embodiments, a case where the server apparatus is specified by the IP address has been described. Alternatively, the server apparatus may be specified by a domain name (for example, server.pana.net). In this case, the domain name is converted into the IP address using a DNS server, such that the server apparatus can be specified.

In the above embodiments, the individual processing (individual functions) maybe implemented through a centralized processing by a signal device (system) or may be implemented through a distributed processing by multiple devices.

In the above embodiments, the individual components may be exclusive-use hardware. Further, the components that can be implemented by software may be implemented by executing a program. For example, the individual components may be implemented by allowing a program executing part, such as a CPU or the like, to read out and execute a software program recorded in a recording medium, such as a hard disk or a semiconductor memory. Moreover, software that implements the information processing apparatus in the above embodiments is a program described below. That is, there is provided a program that causes an information processing apparatus constituting an information processing system to execute a processing, the information processing system having an information processing apparatus, a server apparatus, and a communication processing apparatus performing communication between the information processing apparatus and the server apparatus. The program causes a computer to execute a step of transmitting a request packet, which is a packet requesting a transmission of a reply packet to be transmitted from the server apparatus to the information processing apparatus through the communication processing apparatus, to the server apparatus through one port of the communication processing apparatus, a step of receiving the reply packet from the server apparatus through the port, and a step of detecting a port maintenance time of the communication processing apparatus on the basis of the reply packet received by the reply packet receiving part. In the step of transmitting the request packet, the request packet may be transmitted using a dichotomizing search on the basis of whether or not the reply packet is received in the receiving of the reply packet.

The program causes the computer to further execute a step of measuring a packet round-trip time that is a time from the transmission of a request packet requesting an immediate transmission of the reply packet in the transmitting of the request packet until a reply packet transmitted according to the corresponding request packet is received in the receiving of the reply packet. The port maintenance time may be detected on the basis of the packet round-trip time.

Software that implements the server apparatus in the above embodiments is a program described below. That is, there is provided a program that causes a server apparatus constituting an information processing system to execute a processing, the information processing system having an information processing apparatus, a server apparatus, and a communication processing apparatus performing communication between the information processing apparatus and the server apparatus. The program causes a computer to execute, a step of, when the information processing apparatus transmits a request packet, which requests a transmission of a reply packet to be transmitted from the server apparatus to the information processing apparatus through the communication processing apparatus, to the server apparatus using a dichotomizing search, receiving the request packet transmitted from the information processing apparatus through the communication processing apparatus, and a step of transmitting the reply packet to the information processing apparatus on the basis of the request packet received in the receiving of the request packet.

Moreover, in the above program, the step of transmitting information or the step of receiving the information does not include a processing to be performed by hardware, for example, a processing to be performed by a modem or an interface cared in the transmitting step (a processing to be performed only by hardwaxe).

The program may be downloaded from a server to be then executed or may be read out from a predetermined recording medium (for example, an optical disc, such as CD-ROM, a magnetic disc, or a semiconductor memory) to be then executed.

The computer that executes the program may be a single or multiple. That is, a centralized processing or a distributed processing may be performed.

The invention is not limited to the above embodiments, but various changes and modifications that still fall within the scope of the invention can be made.

### <Industrial Applicability>

As described above, the information processing system according to the invention is used as an information processing system that can detect a port maintenance time of a communication processing apparatus, and has an information processing apparatus transmitting a packet to a server apparatus through the communication processing apparatus.

## Claims

1. An information processing system comprising:
an information processing apparatus;
a server apparatus; and
a communication processing apparatus that performs a processing about communication between the information processing apparatus and the server apparatus;
wherein the information processing apparatus includes
a request packet transmitting part that transmits a request packet, which is a packet for requesting a transmission of a reply packet to be transmitted from the server apparatus to the information processing apparatus through communication processing apparatus, to the server apparatus through one port of the communication processing apparatus;
a reply packet receiving part that receives the reply packet from the server apparatus through the port;
a request packet transmission control part that controls the transmission of the request packet by the request packet transmitting part using a dichotomizing search on the basis of whether or not the reply packet is received by the reply packet receiving part; and
a port maintenance time detecting part that detects a port maintenance time of the communication processing apparatus on the basis of the reply packet received by the reply packet receiving part, and
the server apparatus includes
a request packet receiving part that receives the request packet;
a reply packet transmitting part that transmits the reply packet;
a reply packet transmission control part that controls the transmission of the reply packet on the basis of the request packet received by the request packet receiving part.

2. The information processing system according to claim 1,
wherein the request packet has wait time information that is information about a wait time until the reply packet is transmitted,
the request packet transmission control part determines the wait time using the dichotomizing search on the basis of whether or not the reply packet is received by the reply packet receiving part, and controls the request packet transmitting part to transmit the request packet having wait time information according to the determined wait time,
the port maintenance time detecting part detects the port maintenance time of the communication processing apparatus on the basis of the longest wait time among wait times corresponding to reply packets received by the reply packet receiving part, and
the reply packet transmission control part controls the transmission of the reply packet on the basis of the wait time information included in the request packet received by the request packet receiving part.

3. The information processing system according to claim 2,
wherein the reply packet transmission control part controls the reply packet transmitting part to transmit the reply packet when a wait time according to wait time information included in the request packet lapses after the request packet receiving part receives the request packet.

4. The information processing system according to claim 2 or 3,
wherein the request packet transmission control part controls, when a reply packet corresponding to a transmitted request packet is not received by the reply packet receiving part and one or more reply packets are received by the reply packet receiving part till then, the request packet transmitting part to transmit a request packet having wait time information according to a wait time between a wait time corresponding to the unreceived reply packet and the longest wait time among wait times corresponding to the reply packets received by the reply packet receiving part till then, and
controls, when the reply packet corresponding to the transmitted request packet is received by the reply packet receiving part and when a reply packet not received by the reply packet receiving part exists till then, the request packet transmitting part to transmit a request packet having wait time information according to a wait time between a wait time corresponding to the received reply packet and the shortest wait time among wait times corresponding to reply packets not received by the reply packet receiving part till then.

5. The information processing system according to claim 2 or 3,
wherein the request packet transmission control part controls, when a reply packet corresponding to a transmitted request packet is not received by the reply packet receiving part and when one or more reply packets are received by the reply packet receiving part, the request packet transmitting part to transmit a request packet having wait time information according to a middle wait time between a wait time corresponding to the unreceived reply packet and the longest wait time among wait times corresponding to the reply packets received by the reply packet receiving part till then, and
controls, when the reply packet corresponding to the transmitted request packet is received by the reply packet receiving part and when a reply packet not received by the reply packet receiving part exists till then, the request packet transmitting part to transmit a request packet having wait time information according to a middle wait time between a wait time of the received reply packet and the shortest wait time among wait times corresponding to reply packets not received by the reply packet receiving part till then.

6. The information processing system according to claim 2 or 3,
wherein the request packet transmission control part controls, when a reply packet corresponding to a transmitted request packet is not received by the reply packet receiving part and when no reply packet is received by the reply packet receiving part till then, the request packet transmitting part to transmit a request packet having wait time information according to a wait time shorter than a wait time corresponding to the unreceived reply packet.

7. The information processing system according to claim 2 or 3,
wherein the request packet transmission control part controls, when a reply packet corresponding to a transmitted request packet is not received by the reply packet receiving part and when no reply packet is received by the reply packet receiving part till then, the request packet transmitting part to transmit a request packet having wait time information according to a wait time of half of a wait time corresponding to the unreceived reply packet.

8. The information processing system according to claim 2 or 3,
wherein the port maintenance time detecting part detects, when a reply packet that is transmitted in response to a request packet transmitted by the request packet transmitting part for the first time is received by the reply packet receiving part, the port maintenance time on the basis of a wait time according to wait time information of the corresponding request packet.

9. The information processing system according to claim 2 or 3,
wherein the request packet transmission control part controls, when a reply packet corresponding to a transmitted request packet is received by the reply packet receiving part and when all reply packets are received by the reply packet receiving part, the request packet transmitting part to transmit a request packet having wait time information according to a wait time longer than a wait time of the received reply packet.

10. The information processing system according to any one of claims 1 to 3,
wherein the port maintenance time detecting part detects the port maintenance time after the request packet is transmitted a predetermined number of times.

11. The information processing system according to claim 2 or 3,
wherein the port maintenance time detecting part detects the port maintenance time when a difference between the wait time according to the wait time information included in the request packet transmitted by the request packet transmitting part and a wait time according to wait time information included in a request packet transmitted immediately before than the request packet is smaller than a predetermined value.

12. The information processing system according to any one of claims 1 to 3,
wherein the port maintenance time detecting part detects the port maintenance time when a predetermined time lapses after the request packet transmitting part transmits a request packet for the first time.

13. The information processing system according to any one of claims 1 to 3, further comprising:
a packet round-trip time measuring part that causes the request packet transmitting part to transmit a request packet requesting an immediate transmission of a reply packet, and measures a packet round-trip time that is a time from the transmission of the corresponding request packet until the reply packet transmitted according to the corresponding request packet is received by the reply packet receiving part,
wherein the port maintenance time is detected on the basis of the packet round-trip time.

14. The information processing system according to any one of claims 1 to 3,
wherein a port of the communication processing apparatus, through which the request packet passes, is newly allocated in the communication processing apparatus when a first request packet passes through the corresponding port.

15. An information processing apparatus that constitutes the information processing system according to any one of claims 1 to 3.

16. A server apparatus that constitutes the information processing system according to any one of claims 1 to 3.

17. An information processing method that is used in an information processing apparatus constituting an information processing system having an information processing apparatus, a server apparatus, and a communication processing apparatus performing a processing about communication between the information processing apparatus and the server apparatus, the information processing method comprising the steps of:
transmitting a request packet, which is a packet requesting a transmission of a reply packet to be transmitted from the server apparatus to the information processing apparatus through the communication processing apparatus, to the server apparatus through one port of the communication processing apparatus;
receiving the reply packet from the server apparatus through the port; and
detecting a port maintenance time of the communication processing apparatus on the basis of the reply packet received by the reply packet receiving part,
wherein, in the transmitting of the request packet, the request packet is transmitted using a dichotomizing search on the basis of whether or not the reply packet is received in the receiving of the reply packet.

18. The information processing method according to claim 17, further comprising a step of:
measuring a packet round-trip time that is a time from the transmission of a request packet requesting an immediate transmission of the reply packet in the transmitting of the request packet until a reply packet transmitted according to the corresponding request packet is received in the receiving of the reply packet,
wherein the port maintenance time is detected on the basis of the packet round-trip time.

19. An information processing method that is used in a server apparatus constituting an information processing system having an information processing apparatus, a server apparatus, a communication processing apparatus performing a processing about communication between the information processing apparatus and the server apparatus, the information processing method comprising the steps of:
when the information processing apparatus transmits a request packet, which requests a transmission of a reply packet to be transmitted from the server apparatus to the information processing apparatus through the communication processing apparatus, to the server apparatus using a dichotomizing search, receiving the request packet transmitted from the information processing apparatus through the communication processing apparatus; and
transmitting the reply packet to the information processing apparatus on the basis of the request packet received in the receiving of the request packet.

20. A program that causes an information processing apparatus constituting an information processing system to execute a processing, the information processing system having an information processing apparatus, a server apparatus, and a communication processing apparatus performing communication between the information processing apparatus and the server apparatus, the program causing a computer to execute the steps of:
transmitting a request packet, which is a packet requesting a transmission of a reply packet to be transmitted from the server apparatus to the information processing apparatus through the communication processing apparatus, to the server apparatus through one port of the communication processing apparatus;
receiving the reply packet from the server apparatus through the port; and
detecting a port maintenance time of the communication processing apparatus on the basis of the reply packet received by the reply packet receiving part,
wherein, in the transmitting of the request packet, the request packet is transmitted using a dichotomizing search on the basis of whether or not the reply packet is received in the receiving of the reply packet.

21. The program according to claim 20,
wherein the program causes the computer to further execute a step of:
measuring a packet round-trip time that is a time from the transmission of a request packet requesting an immediate transmission of the reply packet in the transmitting of the request packet until a reply packet transmitted according to the corresponding request packet is received in the receiving of the reply packet,
wherein the port maintenance time is detected on the basis of the packet round-trip time.

22. A program that causes a server apparatus constituting an information processing system to execute a processing, the information processing system having an information processing apparatus, a server apparatus, and a communication processing apparatus performing communication between the information processing apparatus and the server apparatus, the program causing a computer to execute the steps of:
when the information processing apparatus transmits a request packet, which requests a transmission of a reply packet to be transmitted from the server apparatus to the information processing apparatus through the communication processing apparatus, to the server apparatus using a dichotomizing search, receiving the request packet transmitted from the information processing apparatus through the communication processing apparatus; and
transmitting the reply packet to the information processing apparatus on the basis of the request packet received in the receiving of the request packet.
